(19) **Europäisches Patentamt**
**European Patent Office**
**Office européen des brevets**

(11) **EP 3 106 216 A1**

(12) **EUROPEAN PATENT APPLICATION**
published in accordance with Art. 153(4) EPC

(43) Date of publication:
**21.12.2016 Bulletin 2016/51**

(51) Int Cl.:
*B01D 53/04* (2006.01)  *B01D 53/02* (2006.01)
*B01D 53/62* (2006.01)  *B01J 20/06* (2006.01)
*B01J 20/34* (2006.01)  *C01B 31/20* (2006.01)

(21) Application number: **14881848.7**

(22) Date of filing: **15.10.2014**

(86) International application number:
**PCT/JP2014/077430**

(87) International publication number:
**WO 2015/118728 (13.08.2015 Gazette 2015/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.02.2014 JP 2014023329**

(71) Applicant: **Hitachi Chemical Co., Ltd.**
**Chiyoda-ku**
**Tokyo 100-6606 (JP)**

(72) Inventors:
• **YOSHIKAWA, Kouhei**
**Tokyo 100-8280 (JP)**

• **KANEEDA, Masato**
**Tokyo 100-8280 (JP)**
• **NAKAMURA, Hidehiro**
**Tokyo 100-6606 (JP)**
• **SHIRASAKA, Toshiaki**
**Tokyo 100-6606 (JP)**
• **KITAMURA, Kenetsu**
**Tokyo 100-6606 (JP)**
• **ENOMOTO, Kazuhiro**
**Tokyo 100-6606 (JP)**

(74) Representative: **Beetz & Partner mbB**
**Patentanwälte**
**Steinsdorfstraße 10**
**80538 München (DE)**

(54) **CARBON-DIOXIDE RECOVERY APPARATUS, AND CARBON-DIOXIDE RECOVERY METHOD**

(57)  In the step of regenerating a carbon dioxide capturing material, the amount of a regeneration gas to be supplied to a carbon dioxide recovery column is reduced to offer higher energy efficiency and to shorten the time taken to perform the regeneration step. A carbon dioxide recovery apparatus includes a carbon dioxide sorbing column, a heating unit, and first, second, and third channels. The carbon dioxide sorbing column contains a carbon dioxide capturing material. The heating unit heats the carbon dioxide capturing material. A carbon-dioxide-containing gas is introduced via the first channel into the carbon dioxide sorbing column. The regeneration gas is introduced via the second channel into the carbon dioxide sorbing column. A gaseous mixture containing a gas desorbed from the carbon dioxide capturing material is recovered via the third channel. In the apparatus, the heating unit preheats the carbon dioxide capturing material, and then the regeneration gas is introduced into the carbon dioxide sorbing column to recover carbon dioxide from the carbon dioxide capturing material.

*FIG. 1B*

**Description**

**Technical Field**

The present invention relates to an apparatus and a method for recovering carbon dioxide using a carbon dioxide capturing material.

**Background Art**

For reducing a global warming, it is demanded to reduce a carbon dioxide emission, where carbon dioxide serves as a greenhouse gas and has a great impact on the global warming. Specifically, examples of the carbon dioxide emission control include techniques of separation and recovery typically using an absorbent (absorbing liquid) or an adsorbent.

In a known technique for adsorbing and separating a gas, generally, in order to adsorb and separate a specific component in the gas, the specific component is first adsorbed by an adsorbent contained in an adsorption column. The adsorption column housing the adsorbent adsorbing a predetermined amount of the specific component is then heated, and a gas is supplied thereto to desorb the specific component from the adsorbent and to regenerate the adsorbent.

As the gas, it is desirable to use steam (water vapor) or another regeneration gas that can be easily separated from a liquid at room temperature and normal atmospheric pressure, the gas being supplied to eliminate or minimize reduction in gas purity of the recovered specific component. Typically disadvantageously, however, steam condensation occurs at a carbon dioxide capturing material (adsorbent) surface due to steam flow when the carbon dioxide capturing material has a temperature lower than the steam temperature.

In a technique as a possible solution to eliminate or minimize the steam condensation, the carbon dioxide absorbent is heated, and superheated steam is still supplied in the step of regenerating the carbon dioxide absorbent. Disadvantageously, however, the steam is continuously supplied during the regeneration of the carbon dioxide absorbent, and this leads to great loss of condensation heat and increased operation cost upon gas-liquid separation of the recovered carbon dioxide from the steam.

Patent Literature 1 discloses a technique relating to a carbon dioxide recovery system for recovering high-concentration carbon dioxide from a carbon-dioxide-containing gas. With this technique, the recovery of carbon dioxide from the carbon dioxide capturing material is performed using a carrier gas having a boiling point of about 100°C $\pm$50°C at 1 atm, where the carrier gas of this type can be easily separable from carbon dioxide by cooling. The carrier gas is exemplified by, but not limited to, steam, methanol, and ethanol. In addition, carbon dioxide, once sorbed, is desorbed not only by heating with a temperature rise of 200°C or lower, but also by disposing a vacuum pump in a channel that recovers high-concentration carbon dioxide so as to reduce the pressure in the container by a pressure difference of 15 atm or less.

Patent Literature 2 discloses a technique as follows. With this technique, a purge gas having a low $CO_2$ partial pressure is blown in a desorbing step in $CO_2$ separation and recovery. This eliminates the need for pressure reduction in the desorption. This literature also describes that the steam pressure is set higher than the atmospheric pressure. For example, the steam pressure is set at 105 kPa.

**Citation List**

**Patent Literatures**

Patent Literature 1: Japanese Patent Application Laid-Open No. 2013-59704
Patent Literature 2: Japanese Patent Application Laid-Open No. 2010-69398

**Summary of Invention**

**Technical Problem**

The present invention has an object to reduce the amount of a regeneration gas to be supplied into a carbon dioxide recovery column in a carbon dioxide capturing material regeneration process, to increase the energy efficiency, and to perform the regeneration process in a shorter time.

**Solution to Problem**

The present invention provides a carbon dioxide recovery apparatus. The apparatus includes a carbon dioxide sorbing column, a heating unit, and first, second, and third channels. The carbon dioxide sorbing column contains a carbon dioxide capturing material. The heating unit heats the carbon dioxide capturing material. A carbon-dioxide-containing gas is introduced via the first channel into the carbon dioxide sorbing column. A regeneration gas is introduced via the second channel into the carbon dioxide sorbing column. A gaseous mixture containing a gas desorbed from the carbon dioxide capturing material is recovered via the third channel. The apparatus is configured so that the heating unit preheats the carbon dioxide capturing material, and then the regeneration gas is introduced into the carbon dioxide sorbing column to recover carbon dioxide from the carbon dioxide capturing material.

**Advantageous Effects of Invention**

The present invention reduces the amount of a regeneration gas to be supplied to a carbon dioxide recovery column in the step of regenerating a carbon dioxide capturing material, increases the energy efficiency, and performs the regenerating step in a shorter time.

**Brief Description of Drawings**

Figure 1A is a general schematic diagram illustrating how valves are in a carbon dioxide recovery apparatus in the step of preheating a carbon dioxide capturing material for the carbon dioxide capturing material regeneration;
Figure 1B is a general schematic diagram illustrating how the valves are in the step of introducing a regeneration gas to regenerate the carbon dioxide capturing material, where this step is performed after the heating step illustrated in Figure 1A;
Figure 2 is a schematic diagram illustrating an instrument for carbon dioxide capturing material regeneration tests, where the instrument was used in Comparative Example 1 and Examples 1 to 3;
Figure 3 is a graph illustrating the carbon dioxide desorption in the tests in Comparative Example 1 and Examples 1 to 3; and
Figure 4 is a graph illustrating the time taken to complete the carbon dioxide desorption in the tests in Comparative Example 1 and Examples 1 to 3.

**Description of Embodiments**

A carbon dioxide sorbing column constituting part of a carbon dioxide recovery apparatus according to an embodiment of the present invention will be illustrated below with reference to the attached drawings.

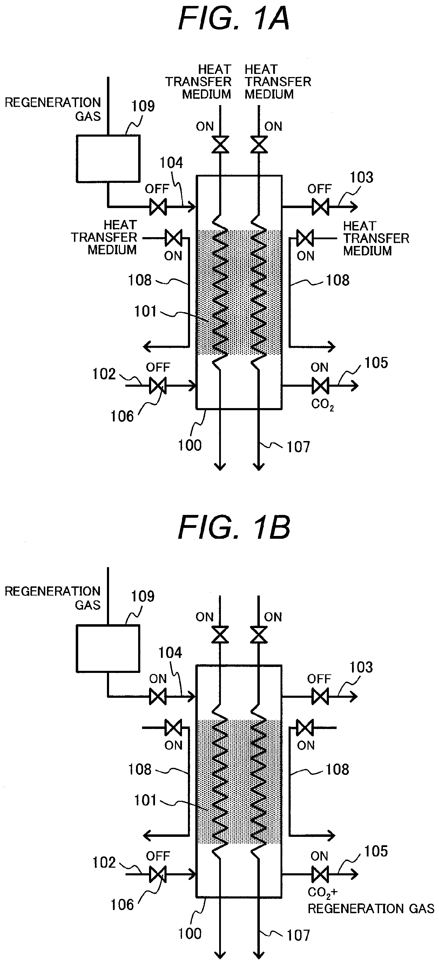

Figures 1A and 1B illustrate the carbon dioxide sorbing column in the carbon dioxide recovery apparatus.
Figure 1A is a general schematic diagram illustrating how valves are in the carbon dioxide recovery apparatus in the step of preliminary heating a carbon dioxide capturing material for the sorbent regeneration.
Figure 1B is a general schematic diagram illustrating how the valves are in the step of introducing a regeneration gas to regenerate the carbon dioxide capturing material, where this step is performed after the heating step illustrated in Figure 1A.
In these figures, a carbon dioxide sorbing column 100 contains a carbon dioxide capturing material 101.
The carbon dioxide sorbing column 100 is coupled to a carbon-dioxide-containing gas channel 102, to a carbon dioxide removed gas recovery channel 103, and to a gaseous mixture recovery channel 105. These channels each have a valve so as to control gas flows. The carbon dioxide sorbing column 100 is also coupled to a regeneration gas channel 104 equipped with a regeneration gas flow rate control unit 109. The carbon dioxide sorbing column 100 is equipped with heat-transfer medium channels 107 and 108 so as to heat the carbon dioxide capturing material 101.
There is a need for performing following three steps (1), (2), and (3) in this order to recover carbon dioxide from a carbon-dioxide-containing gas.
The step (1) is the "step of sorbing" carbon dioxide by the carbon dioxide capturing material.
The step (2) is the "step of regenerating" the carbon dioxide capturing material, in which carbon dioxide, once sorbed, is desorbed from the carbon dioxide capturing material by heating, and a regeneration gas is supplied after the desorption to expel carbon dioxide from the carbon dioxide sorbing column, and the carbon dioxide capturing material is made reusable in another sorbing step.
The step (3) is the "step of cooling" the carbon dioxide capturing material after heating, down to a temperature equal to or slightly higher than the temperature of the carbon-dioxide-containing gas.

Continuous recovery of carbon dioxide from the carbon-dioxide-containing gas can be performed by disposing at least three carbon dioxide sorbing columns 100 and dividing the three steps among the three carbon dioxide sorbing columns 100.

Upon sorption of carbon dioxide, the on-off valve 106 is opened to introduce the carbon-dioxide-containing gas via the carbon-dioxide-containing gas channel 102 into the carbon dioxide sorbing column 100. Thus, the carbon dioxide capturing material 101 selectively sorbs carbon dioxide from the carbon-dioxide-containing gas. The residual gas from which carbon dioxide has been removed is discharged from the carbon dioxide removed gas recovery channel 103. When the carbon dioxide concentration in the gas in the carbon dioxide removed gas recovery channel 103 reaches a predetermined level, or after a lapse of a predetermined time from the start of the carbon-dioxide-containing gas supply, the valves in carbon-dioxide-containing gas channel 102 and the carbon dioxide removed gas recovery channel 103 are closed.

Next, the carbon dioxide capturing material regeneration step will be described.

Figure 1A illustrates how valves are opened or closed in the step of heating the carbon dioxide capturing material to regenerate the sorbent.

In the heating step illustrated in this figure, the gaseous mixture recovery channel 105 is opened so as to desorb and recover carbon dioxide from the carbon dioxide capturing material 101. The carbon dioxide capturing material 101 is heated by heat transfer media passing through the heat-transfer medium channel 107 and the heat-transfer medium channel 108. The heat-transfer medium channel 107 and the heat-transfer medium channel 108 are disposed respectively inside and outside of the carbon dioxide sorbing column 100. Carbon dioxide desorbed from the carbon dioxide capturing material 101 by heating is recovered via the gaseous mixture recovery channel 105. The heat-transfer medium channel 108 which is disposed outside of the carbon dioxide sorbing column 100 in this embodiment may also be disposed outside of the carbon dioxide sorbing column 100 or typically in the wall of the carbon dioxide sorbing column 100. The heat-transfer medium channels 107 and 108 are hereinafter together referred to as a "heating unit".

After a lapse of a predetermined time from the start of the heating, or after the temperature of the carbon dioxide capturing material at a measurement point reaches a level higher than the temperature of the regeneration gas, the regeneration gas, whose flow rate is controlled by the regeneration gas flow rate control unit 109, is supplied from the regeneration gas channel 104 to the carbon dioxide sorbing column 100.

Specifically, the heating unit preheats the carbon dioxide capturing material 101 (preheating step), and thereafter the regeneration gas (steam) is introduced into the carbon dioxide sorbing column 100 (regeneration gas supplying step) to recover carbon dioxide from the carbon dioxide capturing material 101. The control in switching (on-off) in these operations may be performed manually by an operator, or by allowing an attached control unit to issue electrical or mechanical instructions based on detected data.

To shorten the flow time (supply time) of the regeneration gas, the regeneration gas is preferably allowed to flow at a flow rate of 0.5 m/sec or more in terms of a linear velocity in the carbon dioxide sorbing column 100. The flow rate (linear velocity) is more preferably from 0.5 m/sec to 2.5 m/sec from the viewpoint of pressure drop. Assume that the carbon dioxide capturing material has a particle size of 2.5 cm, a voidage of 0.4, and a viscosity of $2.8\times10^{-4}$, and is packed to a height of 10 m to form a carbon dioxide capturing material-packed bed. In this case, the pressure drop is calculated according to the Ergun equation for pressure drop calculation and is found to be 52 kPa at the linear velocity of the regeneration gas of 2.5 m/sec. This pressure drop is higher than an assumed allowable pressure drop of 50 kPa. Accordingly, it has been decided that the regeneration gas preferably has the linear velocity of 2.5 m/sec or less.

The valves in the heat-transfer medium channels 107 and 108 may be closed or not upon supply of the regeneration gas into the carbon dioxide sorbing column.

Figure 1B illustrates how the valves are opened or closed when the regeneration gas flow is started while the heat-transfer medium is still supplied (the valve is opened).

The carbon dioxide partial pressure around the carbon dioxide capturing material 101 can be reduced when the apparatus is in the state illustrated in Figure 1B. This promotes the desorption of carbon dioxide from the carbon dioxide capturing material 101 and allows the carbon dioxide capturing material 101 to be regenerated with a higher regeneration rate. The switching from the heating to the regeneration gas supply may be performed by determining based on data from a temperature metering means (thermometer) disposed in the carbon dioxide sorbing column 100; or by empirically or computationally estimating the time until the temperature reaches a preset temperature, and determining the switching timing based on the time; or by measuring the flow rate (concentration) of the outlet gas

(carbon dioxide) desorbed from the carbon dioxide capturing material, and switching the valves when the flow rate reaches a predetermined level (concentration) or lower. Specifically, the apparatus (the operation) may be controlled so that the regeneration gas supply is stopped when the concentration of carbon dioxide in the gaseous mixture reaches a predetermined level or lower.

In another embodiment, the apparatus (the operation) may be controlled so that the regeneration gas supply is stopped when the concentration of the regeneration gas in the gaseous mixture reaches a predetermined level or higher. The concentration of the regeneration gas may be detected by measuring the dew point of the gaseous mixture.

In yet another embodiment, the apparatus (the operation) may be controlled so that the regeneration gas supply is stopped when the regeneration gas is supplied for a predetermined time. Namely, the regeneration gas may be supplied for a preset time.

The regeneration gas for use herein may be any gas other than carbon dioxide, but is preferably a gas that readily condenses. Examples of such regeneration gas include, but are not limited to, gases having a boiling point of about 100°C ±50°C at 1 atm, including steam; alcohols such as methanol and ethanol; and ketones such as acetone. Among them, steam is particularly preferred from the viewpoints typically of safety. This is because the regeneration gas of this type can be separated and recovered by cooling the recovered gaseous mixture containing the regeneration gas and carbon dioxide.

The carbon dioxide capturing material 101 may be any of materials having a high specific surface area, such as silica, alumina, titania, zirconia, ceria, zeolite, polymeric materials, activated carbon, molecular organic frameworks (MOFs), and zeolitic imidazolate frameworks (ZIFs); and materials containing compounds, such as oxides and carbonates, of alkali metals and alkaline earth metals. The carbon dioxide capturing material 101 may have such a shape that the smallest unit of the component(s) is any of a granule, an aggregate of granules, or a composite of them. Assume that the carbon dioxide capturing material 101 is formed as a member (structural component). In this case, the carbon dioxide capturing material 101 preferably has such a shape as to offer gas-permeability. Typically, carbon dioxide capturing material 101 in this case may be formed as a porous article or as a honeycomb article. The carbon dioxide capturing material 101 may also have an outer shape selected typically from bulk and plate-like shapes. The carbon dioxide capturing material 101 is particularly preferably an oxide containing cerium (Ce) (ceria combined with one or more other elements to offer higher performance).

A preferred, but non-limiting example of the Ce-containing oxide is an oxide containing Al in addition to Ce. This oxide preferably contains Ce as an element that is contained in a highest content among metal elements in the oxide, and contains Al in a content of from 0.01% by mole to 40% by mole.

The Ce-containing oxide preferably contains Ce in a content of 40% by mole or more.

The Ce-containing oxide preferably further contains 0.01% by mole or more of at least one element selected from the group consisting of Fe, Cu, V, and Mo.

The Ce-containing oxide preferably contains Fe, Cu, V, and Mo in contents meeting a condition specified by Expression (1) :

$$(\text{Fe content}) \times 1.0 + (\text{Cu content}) \times 1.3 + (\text{V content})$$
$$\times 3.3 + (\text{Mo content}) \times 3.3 \leq 10 \qquad (1)$$

where contents in the expression are indicated in percent by mole.

The Ce-containing oxide preferably further contains at least one element selected from the group consisting of La, Pr, Nd, Pm, Sm, Eu, Gd, Tb, Dy, Ho, Er, Tm, Yb, and Lu in a total content of 0.01% to 50% by mole.

The present invention will be illustrated in further detail with reference to a comparative example and examples.

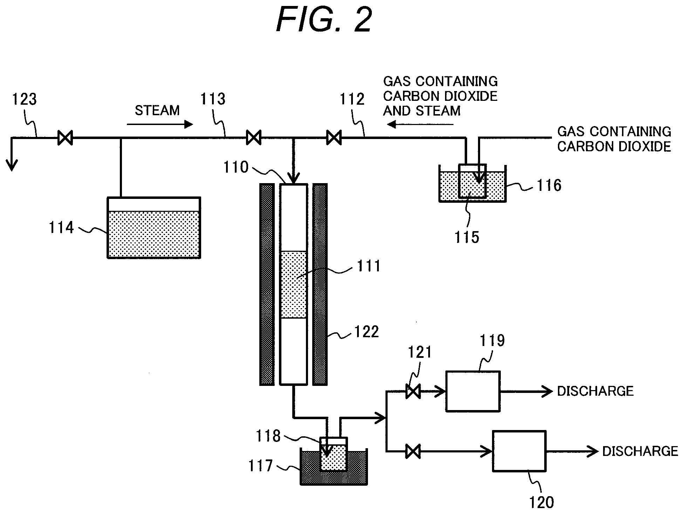

Figure 2 illustrates the schematic configuration of a test instrument used in Comparative Example 1 and Examples 1 to 3 below.

The test instrument illustrated in Figure 2 includes a tubular reactor 110, a steam generator 114, a bubbling pot 115, and a steam-recovering water tank 118. The tubular reactor 110 is equipped with a heater 122. The bubbling pot 115 is disposed in a thermostat 116. The steam-recovering water tank 118 is disposed in a cooling water tank 117. The tubular reactor 110 is packed with (filled with) a carbon dioxide capturing material 111. The steam generator 114 and the bubbling pot 115 are coupled respectively via lines 112 and 113 to the tubular reactor 110. The flow amount of steam generated by the steam generator 114 can be measured with sampling the steam via a steam flow measurement channel 123.

The apparatus is configured so that the carbon dioxide concentration and flow rate of a gas passed through the steam-recovering water tank 118 can be measured respectively by a carbon dioxide concentration meter 119 and a flowmeter 120.

**Comparative Example 1**

A test as follows was performed as Comparative Example 1. In the test, saturated steam at 100°C was supplied to a carbon dioxide capturing material to regenerate the sorbent, where the carbon dioxide capturing material had reached sorption equilibrium (adsorption equilibrium) at 50°C and a carbon dioxide partial pressure of 13 kPa.

The carbon dioxide capturing material used herein was high specific surface area ceria (HS) supplied by DAIICHI KIGENSO KAGAKU CO., LTD. The carbon dioxide capturing material molded into granules of a size of 0.5 to 1.0 mm was prepared in an amount of 16 cm$^3$, charged into a tubular reactor having a cross-sectional area of 0.9 cm$^2$, and the test was performed in the following manner.

As illustrated in Figure 2, nitrogen was supplied to the carbon dioxide capturing material 111 at a flow rate of 400 cc/min and a heater temperature of 300°C for 2 hours to cleanse the carbon dioxide capturing material.

Next, a sorbing step so as to allow the carbon dioxide capturing material 111 to reach sorption equilibrium was performed. In this step, a carbon-dioxide-containing gas was supplied via the bubbling pot 115 in the thermostat 116 set at 50°C to be combined with steam, and the resulting gas further containing the steam was supplied into the tubular reactor 110 to come in contact with the carbon dioxide capturing material 111. The temperature of the heater 122 was set at 50°C.

A tubular reactor outlet gas was supplied via the steam-recovering water tank 118 to remove steam (moisture vapor) therefrom, where the steam-recovering water tank 118 was cooled by the cooling water tank 117 set at 10°C. The residual gas was fed to the carbon dioxide concentration meter 119 to measure the carbon dioxide concentration. In this step, a valve 121 in a line leading to the flowmeter 120 was closed. The flow rate of steam generated by the steam generator 114 was measured via the steam flow measurement channel 123 and was found to be 898 cc/min, corresponding to 0.2 m/sec in terms of the linear velocity in the tubular reactor 110. Upon lapse of a sufficient time after the concentration measured with the carbon dioxide concentration meter 119 became equal to the concentration of the tubular reactor inlet gas, the sorbing step was completed, and the supply of the carbon-dioxide-containing gas was stopped.

The regeneration step was started simultaneously with the completion of the sorbing step. The regeneration step included a preheating step and a subsequent regeneration gas supplying step.

In the preheating step, the heater 122 was set at 200°C, a valve in the channel leading to the carbon dioxide concentration meter 119 was closed, but the valve 121 in the line leading to the flowmeter 120 was opened. An integrated flow rate was calculated from data from the flowmeter 120, and based on this, the carbon dioxide desorption at an output of the heater 122 of 200°C was calculated. Thus, the carbon dioxide desorption in the preheating step was found to be about 500 mmol/L.

Next, the regeneration gas supplying step was performed. Specifically, saturated steam (regeneration gas) at 100°C and 0.1 MPa was generated by the steam generator 114 and supplied via a line 113 (steam channel) to the tubular reactor 110. In this step, the output of the heater 122 was still set at 200°C to eliminate or minimize steam condensation. An integrated flow rate was calculated based on data from the flowmeter 120, and a change with time of the accumulated carbon dioxide desorption during the steam supply was determined.

**Example 1**

A test including a sorbing step and a desorbing step was performed as Example 1 by a procedure similar to Comparative Example 1. However, the output of the steam generator was changed, and the flow rate of the generated steam was measured via the steam flow measurement channel and was found to be 2781 cc/min, corresponding to 0.5 m/sec in terms of the linear velocity in the tubular reactor. An integrated flow rate was calculated based on data from the flow rate measuring and recording means (flowmeter) 120, based on which a change with time of the integrated carbon dioxide desorption during the steam supply was determined.

**Example 2**

A test including a sorbing step and a desorbing step was performed as Example 2 by a procedure similar to Comparative Example 1. However, the output of the steam generator was changed, and the flow rate of the generated steam was measured via the steam flow measurement channel and was found to be 7021 cc/min, corresponding to 1.3 m/sec in terms of the linear velocity in the tubular reactor. An integrated flow rate was calculated based on data from the flow rate measuring and recording means (flowmeter) 120, based on which a change with time of the integrated carbon dioxide desorption during the steam supply was determined.

**Example 3**

A test including a sorbing step and a desorbing step was performed as Example 3 by a procedure similar to Comparative Example 1. However, the output of the steam generator was changed, and the flow rate of the generated steam was measured via the steam flow measurement channel and was found to be 10691 cc/min, which corresponds to 2.0 m/sec in terms of the linear velocity in the tubular reactor. An integrated flow rate was calculated based on data from the flow rate measuring and recording means (flowmeter) 120, based on which a change with time of the integrated carbon dioxide desorption during the steam supply was determined.

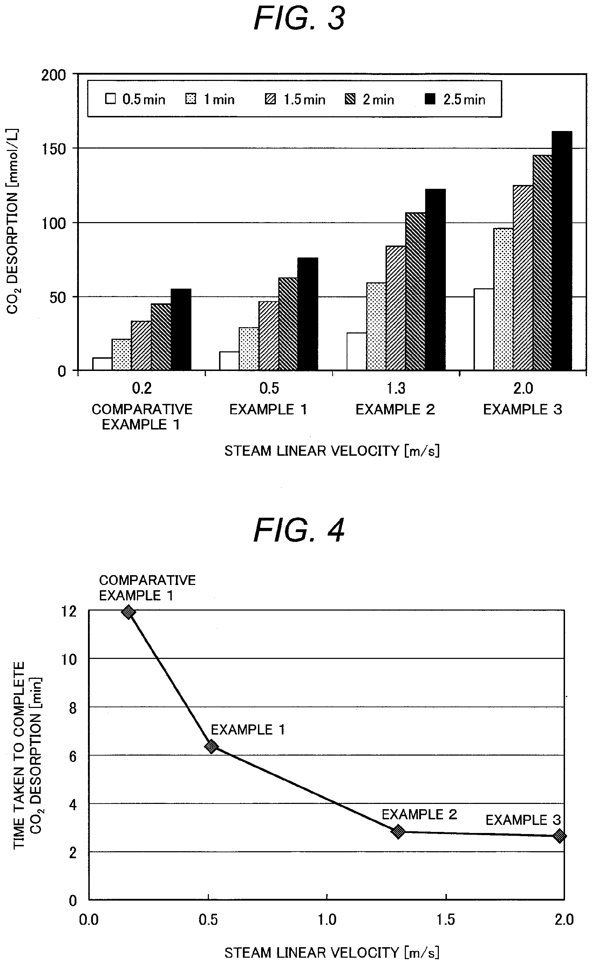

Figure 3 presents the integrated desorbed amounts of $CO_2$ upon lapse of 0.5 min, 1 min, 1.5 min, 2 min, and 2.5 min. The abscissa indicates the linear velocity of the steam in Comparative Example 1 and Examples 1 to 3.

Figure 4 presents the time taken to desorb the whole quantity of $CO_2$ after the steam supply start.

In Figures 3 and 4, Comparative Example 1 and Examples 1 to 3 are contrasted with each other.

Figure 3 demonstrates that the desorption amount and desorption rate of $CO_2$ increase with an increasing steam linear velocity.

Figure 4 demonstrates as follows.

According to Example 1, the time taken to desorb the whole quantity of $CO_2$ is shortened to about 6 min which is about one half of the time in Comparative Example 1.

According to Example 2, the time taken to desorb the whole quantity of $CO_2$ is shortened to about 3 min which is about one fourth of the time in Comparative Example 1.

According to Example 3, the time taken to desorb the whole quantity of $CO_2$ is shortened to about 3 min which is about one fourth of the time in Comparative Example 1.

**Reference Signs List**

| | |
|---|---|
| 100: | carbon dioxide sorbing column, |
| 101: | carbon dioxide capturing material, |
| 102: | carbon-dioxide-containing gas channel, |
| 103: | carbon dioxide-removed gas recovery channel, |
| 104: | regeneration gas channel, |
| 105: | gaseous mixture recovery channel, |
| 106: | on-off valve, |
| 107, 108: | heat-transfer medium channel, |
| 109: | regeneration gas flow rate control unit, |
| 110: | tubular reactor, |
| 111: | carbon dioxide capturing material, |
| 112, 113: | line, |
| 114: | steam generator, |
| 115: | bubbling pot, |
| 116: | thermostat, |
| 117: | cooling water tank, |
| 118: | steam-recovering water tank, |
| 119: | carbon dioxide concentration meter, |
| 120: | flowmeter, |
| 121: | valve, |
| 122: | heater, and |
| 123: | steam flow measurement channel. |

**Claims**

1. A carbon dioxide recovery apparatus comprising:

   a carbon dioxide sorbing column that contains a carbon dioxide capturing material;
   a heating unit that heats the carbon dioxide capturing material;
   a channel that introduces a carbon-dioxide-containing gas into the carbon dioxide sorbing column;
   a channel that introduces a regeneration gas into the carbon dioxide sorbing column; and
   a channel that recovers a gaseous mixture containing a gas desorbed from the carbon dioxide capturing material,

   wherein the heating unit preheats the carbon dioxide capturing material, and, after the preheating, the regeneration gas is introduced into the carbon dioxide sorbing column to recover carbon dioxide from the carbon dioxide capturing material.

2. The carbon dioxide recovery apparatus according to claim 1,
   wherein the regeneration gas is supplied for a preset time.

**3.** The carbon dioxide recovery apparatus according to claim 1,
wherein a supply of the regeneration gas is stopped when a concentration of carbon dioxide in the gaseous mixture reaches a predetermined level or lower.

**4.** The carbon dioxide recovery apparatus according to claim 1,
wherein a supply of the regeneration gas is stopped when a concentration of the regeneration gas in the gaseous mixture reaches a predetermined level or higher.

**5.** The carbon dioxide recovery apparatus according to any one of claims 1 to 4,
wherein a linear velocity of the regeneration gas in the carbon dioxide sorbing column is controlled at 0.5 m/sec to 2.5 m/sec.

**6.** The carbon dioxide recovery apparatus according to any one of claims 1 to 5,
wherein the regeneration gas is a water vapor.

**7.** The carbon dioxide recovery apparatus according to any one of claims 1 to 6,
wherein the carbon dioxide capturing material includes an oxide containing Ce.

**8.** A method for recovering carbon dioxide, the method using a carbon dioxide recovery apparatus comprising:

a carbon dioxide sorbing column that contains a carbon dioxide capturing material;
a heating unit that heats the carbon dioxide capturing material;
a channel that introduces a carbon-dioxide-containing gas into the carbon dioxide sorbing column;
a channel that introduces a regeneration gas into the carbon dioxide sorbing column; and
a channel that recovers a gaseous mixture containing a gas desorbed from the carbon dioxide capturing material,
the method comprising the steps in the sequence set forth:

a) preheating the carbon dioxide capturing material with the heating unit; and
b) supplying the regeneration gas into the carbon dioxide sorbing column to recover carbon dioxide from the carbon dioxide capturing material.

**9.** The method according to claim 8 for recovering carbon dioxide,
wherein the step b) includes supplying the regeneration gas for a preset time.

**10.** The method according to claim 8 for recovering carbon dioxide,
wherein a supply of the regeneration gas is stopped when a concentration of carbon dioxide in the gaseous mixture reaches a predetermined level or lower.

**11.** The method according to claim 8 for recovering carbon dioxide,
wherein a supply of the regeneration gas is stopped when a concentration of the regeneration gas reaches a predetermined level or higher.

**12.** The method according to any one of claims 8 to 11 for recovering carbon dioxide,
wherein a linear velocity of the regeneration gas in the carbon dioxide sorbing column is controlled at 0.5 m/sec to 2.5 m/sec.

**13.** The method according to any one of claims 8 to 12 for recovering carbon dioxide,
wherein the regeneration gas is a water vapor.

**14.** The method according to any one of claims 8 to 13 for recovering carbon dioxide,
wherein the carbon dioxide capturing material includes an oxide containing Ce.

# FIG. 1A

REGENERATION
GAS — 109

HEAT
TRANSFER
MEDIUM — ON

HEAT
TRANSFER
MEDIUM — ON

104
OFF

OFF — 103

HEAT
TRANSFER
MEDIUM — ON

ON — HEAT
TRANSFER
MEDIUM

108 — 108

101

102 — OFF

ON — 105
CO₂

106

100 — 107

# FIG. 1B

REGENERATION
GAS — 109

ON — ON

104
ON

OFF — 103

ON — ON

108 — 108

101

102 — OFF

ON — 105
CO₂ +
REGENERATION GAS

106

100 — 107

# FIG. 2

123   STEAM   113   112   GAS CONTAINING CARBON DIOXIDE AND STEAM

GAS CONTAINING CARBON DIOXIDE

110

114

111

122

116

115

118

117

121   119

120

DISCHARGE

DISCHARGE

## FIG. 3

## FIG. 4

## INTERNATIONAL SEARCH REPORT

| International application No. |
|---|
| PCT/JP2014/077430 |

A. CLASSIFICATION OF SUBJECT MATTER
*B01D53/04*(2006.01)i, *B01D53/02*(2006.01)i, *B01D53/62*(2006.01)i, *B01J20/06*(2006.01)i, *B01J20/34*(2006.01)i, *C01B31/20*(2006.01)i

According to International Patent Classification (IPC) or to both national classification and IPC

B. FIELDS SEARCHED

Minimum documentation searched (classification system followed by classification symbols)
B01D53/00-53/96, B01J20/00-20/34, C01B31/20

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| P,X | JP 2014-181162 A (Hitachi, Ltd.), 29 September 2014 (29.09.2014), claims; example 1; paragraph [0061]; drawings (Family: none) | 1-4,6-11, 13-14 |
| Y | JP 2013-059704 A (Hitachi, Ltd.), 04 April 2013 (04.04.2013), claims; paragraphs [0010], [0018]; examples & US 2013/0064720 A1    & EP 2567746 A1 & CA 2786120 A1 | 1-14 |
| Y | JP 2013-198868 A (Hitachi, Ltd.), 03 October 2013 (03.10.2013), claims; paragraphs [0001] to [0007]; examples & WO 2013/145899 A | 1-14 |

|X| Further documents are listed in the continuation of Box C.     | | See patent family annex.

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 25 November, 2014 (25.11.14) | Date of mailing of the international search report 09 December, 2014 (09.12.14) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/077430

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-527936 A  (Siemens AG.),<br>10 November 2011 (10.11.2011),<br>claims; paragraph [0039]; drawings<br>& US 2011/0139003 A1    & EP 2145667 A1<br>& WO 2010/006825 A1    & AU 2009270451 A<br>& CA 2730865 A          & RU 2011105825 A | 1-14 |
| Y | JP 2013-163138 A  (Hitachi, Ltd.),<br>22 August 2013 (22.08.2013),<br>claims; paragraph [0016]; examples; drawings<br>(Family: none) | 1-14 |
| Y | JP 2011-177684 A  (Toshiba Corp.),<br>15 September 2011 (15.09.2011),<br>claims; paragraphs [0009] to [0013]; examples<br>(Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013059704 A

- JP 2010069398 A